# FASCICULE DE BREVET EUROPEEN

(11) **EP 2 547 728 B1**
(45) Date de publication et mention de la délivrance du brevet: **02.07.2014**
(21) Numéro de dépôt: 11708261.0
(22) Date de dépôt: 15.03.2011
(51) Int. Cl.: C08L 15/00, C08C 19/22, C08C 19/20, C08C 19/25, C08C 19/34, C08C 19/36, C08L 19/00

(54) **PNEUMATIQUE ET COMPOSITION DE CAOUTCHOUC CONTENANT UN POLYMERE GREFFE**
REIFEN UND KAUTSCHUKZUSAMMENSETZUNG MIT PFROPFPOLYMER
TIRE AND RUBBER COMPOSITION CONTAINING A GRAFTED POLYMER.

(30) Priorité: 18.03.2010 FR 1051959
(43) Date de publication de la demande: 23.01.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: ARAUJO DA SILVA, José Carlos, F-63430 Pont Du Chateau (FR); FAVROT, Jean-Michel, F-63800 Cournon-d'Auvergne (FR); MATMOUR, Rachid, F-63100 Clermont-Ferrand (FR); SALIT, Anne Frédérique, F-63000 Clermont-Ferrand (FR); SEEBOTH, Nicolas, F-63000 Clermont-Ferrand (FR)
(74) Mandataire: Le Cam, Véronique Marie Christine
(86) Numéro de dépôt international: PCT/EP2011/053861
(87) Numéro de publication internationale: WO 2011/113818

(56) Documents cités:
- WO-A1-2006/016041
- US-A- 5 188 745
- US-A1- 2006 089 445

## Description

La présente invention se rapporte à un pneumatique comprenant une composition de caoutchouc à base d'au moins un élastomère diénique, d'une charge renforçante, d'un agent de réticulation chimique et d'au moins un agent de modification particulier.

Dans le domaine de la fabrication des pneumatiques et en particulier de la formulation des compositions caoutchouteuses en contact avec le sol, appelées bandes de roulement, on cherche généralement à trouver le meilleur compromis possible entre des performances antagonistes telles que la résistance au roulement et la capacité du pneumatique à accepter certaines déformations de façon provisoire.

En particulier, on souhaite que les matériaux constituant les bandes de roulement présentent une bonne rigidité aux basses et moyennes déformations, de façon notamment à assurer une résistance au roulement faible, tout en étant aptes à accepter certaines déformations de façon réversible et sans se dégrader sous l'effet de contraintes ou déformations plus importantes. Autrement dit, on souhaite disposer d'un matériau qui, tout en étant rigide aux basses et moyennes déformations, présente un allongement à la rupture ou une contrainte à la rupture élevés.

Il est bien connu que la réticulation chimique des élastomères leur confère de bonnes propriétés mécaniques et thermiques. La réticulation chimique se caractérise par l'établissement de liaisons chimiques covalentes entre les chaînes polymères. Il existe de nombreuses méthodes de réticulation chimique. Les méthodes les plus utilisées sont celles à base de composés soufrés, utiles pour la réticulation de matériaux élastomères contenant des insaturations dans leurs chaînes principales. Une autre méthode très utilisée est la réticulation chimique aux peroxydes.

Cependant, lorsque le nombre de liaisons covalentes entre les chaînes polymères (densité pontale) augmente, la rigidité aux faibles et moyennes déformations augmente, mais l'allongement à la rupture diminue. Inversement, si la densité pontale diminue, l'allongement à la rupture augmente, mais la rigidité aux faibles et moyennes déformations diminue.

La demanderesse a découvert que le compromis entre une bonne rigidité à basse et moyenne déformation et un allongement à la rupture élevé pouvait être obtenu en introduisant dans l'élastomère une densité spécifique des liaisons non covalentes entre les chaînes.

La présence de liaisons non covalentes entre les chaînes est généralement appelée réticulation physique ou réticulation réversible. La réticulation physique peut être obtenue en fonctionnalisant la chaîne du polymère par des molécules chimiques capables de s'associer entre elles via des interactions physiques non permanentes telles que les interactions ioniques, les liaisons hydrogène, les interactions ions-dipôle et dipôle-dipôle.

Lorsque un tel élastomère est formulé dans une composition de caoutchouc en présence d'un système de réticulation chimique, des liaisons covalentes apparaissent entre les chaînes d'élastomère, qui viennent s'ajouter aux liaisons non covalentes.

On entend dans la suite du texte par « taux d'agent de modification » présent dans une composition de caoutchouc, exprimé en pourcentage molaire, le nombre de molécules d'agent de modification présentes dans la composition pour cent motifs d'élastomère diénique de la composition, qu'il s'agisse indifféremment de motifs diéniques ou non diéniques.

Par exemple, si le taux d'agent de modification sur un SBR est de 0,20% molaire, cela signifie qu'il y aura 0,20 molécule d'agent de modification pour 100 motifs styréniques et butadiéniques de SBR.

Dans le cas où on utilise dans la composition à la fois un élastomère déjà greffé par l'agent de modification et un élastomère diénique non greffé par un agent de modification, le taux d'agent de modification représente le nombre de molécules d'agent de modification greffées pour 100 motifs d'élastomères diéniques, le nombre de motifs prenant en compte les deux élastomères (greffé et non greffé), en supposant que d'autres molécules d'agent de modification non déjà greffées n'ont pas été ajoutées dans la composition.

L'invention a donc pour objet un pneumatique comportant au moins une composition de caoutchouc à base d'au moins un élastomère diénique, une charge renforçante, un agent de réticulation chimique et un agent de modification, éventuellement déjà greffé sur l'élastomère diénique, choisi parmi les composés de formule (I) suivante : 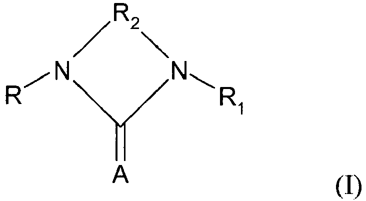 où
R désigne un motif contenant au moins un groupe réactif,
R₁ désigne l'hydrogène,
R₂ désigne un radical alkyl comportant de 2 à 8 atomes de carbone et éventuellement un ou plusieurs hétéroatomes choisis parmi S, N, O, Si,
A désigne un atome d'oxygène ou de soufre ou un groupement -NH, de préférence un atome d'oxygène.

Les ponts de réticulation à liaisons covalentes sont formés grâce la présence du système de réticulation chimique. Les ponts de réticulation à liaisons non covalentes sont formés par la présence des groupes associatifs de l'agent de modification une fois greffé le long de la chaîne de l'élastomère.

L'invention a également pour objet un procédé pour préparer une composition de caoutchouc pour pneumatique à base d'au moins un élastomère diénique, une charge renforçante et un agent de réticulation chimique, caractérisé et qu'il comprend les étapes suivantes :
- greffer sur l'élastomère diénique, un agent de modification choisi parmi les composés de formule (I) suivante : 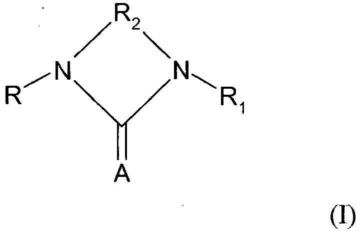 où
   R désigne un motif contenant au moins un groupe réactif,
   R₁ désigne l'hydrogène,
   R₂ désigne un radical alkyl comportant de 2 à 8 atomes de carbone et éventuellement un ou plusieurs hétéroatomes choisis parmi S, N, O, Si,
   A désigne un atome d'oxygène ou de soufre ou un groupement -NH, de préférence un atome d'oxygène,
- incorporer à l'élastomère diénique ainsi greffé par l'agent de modification, la charge renforçante, en malaxant thermomécaniquement le tout, en une ou plusieurs fois, jusqu'à atteindre une température maximale comprise entre 130°C et 200°C,
- refroidir l'ensemble à une température inférieure à 100°C,
- incorporer ensuite l'agent de réticulation chimique,
- malaxer le tout jusqu'à une température maximale inférieure à 120°C,
- extruder ou calandrer la composition de caoutchouc ainsi obtenue.

L'invention a encore pour objet un procédé pour préparer une composition de caoutchouc pour pneumatique à base d'au moins un élastomère diénique, une charge renforçante et un agent de réticulation chimique, caractérisé et qu'il comprend les étapes suivantes :
- incorporer à l'élastomère diénique, la charge renforçante, un agent de modification choisi parmi les composés de formule (I) suivante : 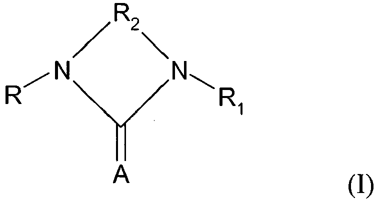 où
   R désigne un motif contenant au moins un groupe réactif,
   R₁ désigne l'hydrogène,
   R₂ désigne un radical alkyl comportant de 2 à 8 atomes de carbone et éventuellement un ou plusieurs hétéroatomes choisis parmi S, N, O, Si,
   A désigne un atome d'oxygène ou de soufre ou un groupement -NH, de préférence un atome d'oxygène,
   en malaxant thermomécaniquement le tout, en une ou plusieurs fois, jusqu'à atteindre une température maximale comprise entre 130°C et 200°C,
- refroidir l'ensemble à une température inférieure à 100°C,
- incorporer ensuite l'agent de réticulation chimique,
- malaxer le tout jusqu'à une température maximale inférieure à 120°C,
- extruder ou calandrer la composition de caoutchouc ainsi obtenue.

En particulier, la composition de caoutchouc comprise dans le pneumatique selon l'invention peut être présente dans au moins un produit semi-fini en caoutchouc du pneumatique, ce produit semi-fini étant de préférence choisi dans le groupe constitué par les bandes de roulement, les nappes d'armature de sommet, les flancs, les nappes d'armature de carcasse, les bourrelets, les protecteurs, les blocs de caoutchouc et autres gommes internes, notamment les gommes de découplage, destinés à assurer la liaison ou l'interface entre les zones précitées du pneumatique.

Les pneumatiques conformes à l'invention sont notamment destinés à des véhicules tourisme comme à des véhicules deux roues (moto, vélo), à des véhicules industriels choisis parmi camionnettes, « Poids-lourd »- i.e. métro, bus, engins de transport routier (camions, tracteurs, remorques), véhicules hors-la-route -, engin agricoles ou de génie civil, avions, autres véhicules de transport ou de manutention.

L'invention ainsi que ses avantages seront aisément compris à la lumière de la description et des exemples de réalisation qui suivent.

### I. Mesures et tests utilisés

Les élastomères et compositions de caoutchouc sont caractérisées, avant et après cuisson, comme indiqué ci-après.

### Température de transition vitreuse

Les températures de transition vitreuse Tg des polymères sont mesurées au moyen d'un calorimètre différentiel (" differential scanning calorimeter "). L'analyse est réalisée selon les requis de la norme ASTM D3418-08.

### Spectroscopie proche infrarouge (NIR)

La spectroscopie proche infrarouge (NIR) est utilisée pour déterminer quantitativement le taux massique de styrène dans l'élastomère ainsi que sa microstructure (répartition relative des unités butadiene 1,2-vinyl, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN ¹³C. Le taux de styrène et la microstructure sont alors calculés à partir du spectre NIR d'un film d'élastomère d'environ 730 µm d'épaisseur. L'acquisition du spectre est réalisée en mode transmission entre 4000 et 6200 cm⁻¹ avec une résolution de 2 cm⁻¹, à l'aide d'un spectromètre proche infrarouge à transformée de Fourier Bruker Tensor 37 équipé d'un détecteur InGaAs refroidi par effet Peltier.

### Chromatographie d'exclusion stérique

On utilise la chromatographie d'exclusion stérique ou SEC (Size Exclusion Chromatography). La SEC permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

Préparation du polymère: Il n'y a pas de traitement particulier de l'échantillon de polymère avant analyse. Celui-ci est simplement solubilisé, dans du (tétrahydrofuranne + 1%vol. de diisopropylamine + 1%vol. de triéthylamine + 1%vol. d'eau distillée) ou dans du chloroforme, à une concentration d'environ 1 g/l. Puis la solution est filtrée sur filtre de porosité 0,45µm avant injection.

Analyse SEC: L'appareillage utilisé est un chromatographe « WATERS alliance ». Le solvant d'élution est du tétrahydrofuranne + 1 %vol. de diisopropylamine + 1%vol. de triéthylamine ou du chloroforme selon le solvant utilisé pour la mise en solution du polymère. Le débit est de 0,7 ml/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».

Le volume injecté de la solution de l'échantillon de polymère est 100 µl. Le détecteur est un réfractomètre différentiel « WATERS 2410 » et le logiciel d'exploitation des données chromatographiques est le système « WATERS EMPOWER».

Les masses molaires moyennes calculées sont relatives à une courbe d'étalonnage réalisée à partir de polystyrènes étalons commerciaux « PSS READY CAL-KIT ».

### Essais de traction

Ces essais de traction permettent de déterminer les contraintes d'élasticité et les propriétés à la rupture. Sauf indication différente, ils sont effectués conformément à la norme française NF T 46-002 de septembre 1988. Un traitement des enregistrements de traction permet également de tracer la courbe de module en fonction de l'allongement. Le module utilisé ici étant le module sécant nominal (ou apparent) mesuré en première élongation, calculé en se ramenant à la section initiale de l'éprouvette. On mesure en première élongation les modules sécants nominaux (ou contraintes apparentes, en MPa) à 10%, 100% et 300% d'allongement notés respectivement MSA10, MSA100 et MSA300.

Les contraintes à la rupture (en MPa) et les allongements à la rupture (en %) sont mesurés à 23°C ± 2°C et à 100°C ± 2°C, selon la norme NF T 46-002.

### Propriétés dynamiques

Les propriétés dynamiques ΔE* et tan(δ)ₘₐₓ sont mesurées sur un viscoanalyseur (Metravib VA4000), selon la norme ASTM D 5992-96. On enregistre la réponse d'un échantillon de composition, vulcanisée (éprouvette cylindrique de 20 mm de hauteur et de 78 mm² de section), soumis à une sollicitation sinusoïdale en traction-compression alternée, à la fréquence de 10Hz, dans les conditions normales de température (23°C) selon la norme ASTM D 1349-99, ou selon les cas à une température différente (100°C). On effectue un balayage en amplitude de déformation de 0,01% à 7% (cycle aller), puis de 7% à 0,01% (cycle retour). Les résultats exploités sont le module complexe dynamique (E*) et le facteur de perte tan(δ). Pour le cycle retour, on indique la valeur maximale de tan(δ) observée, noté tan(δ)ₘₐₓ, ainsi que l'écart de module complexe (ΔE*) entre les valeurs à 0,01% et à 7% de déformation (effet Payne).

### II. Conditions de réalisation de l'invention

Comme expliqué précédemment, la composition de caoutchouc comprise dans le pneumatique selon l'invention est à base d'un ou plusieurs élastomères diéniques, d'une ou plusieurs charges renforçantes, d'un agent de réticulation chimique et d'au moins un agent de modification de formule (I), et additifs éventuels classiquement utilisés dans les compositions de caoutchouc pour pneumatique.

Par l'expression composition « à base de », il faut entendre une composition comportant le mélange et/ou le produit de réaction des différents constituants utilisés, certains de ces constituants de base étant susceptibles de, ou destinés à réagir entre eux, au moins en partie, lors des différentes phases de fabrication de la composition, en particulier au cours de sa réticulation chimique.

Dans la présente description, sauf indication expresse différente, tous les pourcentages (%) sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### II-1. Elastomère diénique

Par élastomère ou caoutchouc "diénique", doit être compris de manière connue un élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène; de tels polymères sont décrits en particulier dans les documents WO 2004/035639A1 et US 2005/0239639A1 ;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant randomisant employées. Les élastomères peuvent être par exemple à blocs, statistiques, séquencés, microséquencés, et être préparés en dispersion, en émulsion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778, US 6 013 718 ou WO 2008/141702), des groupes alkoxysilane (tels que décrits par exemple dans FR 2 765 882 ou US 5 977 238), des groupes aminoalkoxysilane (tels que décrits par exemple dans WO 2009/133068), des groupes carboxyliques (tels que décrits par exemple dans WO 01/92402, US 6 815 473, WO 2004/096865 ou US 2006/0089445) ou encore des groupes polyéthers (tels que décrits par exemple dans EP 1 127 909, US 6 503 973, WO 2009/000750 ou WO 2009/000752). Comme autres exemples d'élastomères fonctionnalisés, on peut citer également des élastomères (tels que SBR, BR, NR ou IR) du type époxydés, halogénés ou à fonctions anhydrides ou acides carboxyliques.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre 5 °C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiéne-styrène-isoprène ayant une Tg comprise entre - 5°C et - 70°C.

En résumé, le ou les élastomères diéniques utilisés dans l'invention sont choisis préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Selon un mode de réalisation particulier, l'élastomère diénique est majoritairement (i.e., pour plus de 50 pce) un SBR, qu'il s'agisse d'un SBR préparé en émulsion ("ESBR") ou d'un SBR préparé en solution ("SSBR"), ou un coupage (mélange) SBR/BR, SBR/NR (ou SBR/IR), BR/NR (ou BR/IR), ou encore SBR/BR/NR (ou SBR/BR/IR). Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

Selon un autre mode de réalisation particulier, l'élastomère diénique est majoritairement (pour plus de 50 pce) un élastomère isoprénique. C'est le cas en particulier lorsque les compositions de l'invention sont destinées à constituer, dans les pneumatiques, les matrices de caoutchouc de certaines bandes de roulement (par exemple pour véhicules industriels), de nappes d'armature de sommet (par exemple de nappes de travail, nappes de protection ou nappes de frettage), de nappes d'armature de carcasse, de flancs, de bourrelets, de protecteurs, de sous-couches, de blocs de caoutchouc et autres gommes internes assurant l'interface entre les zones précitées des pneumatiques.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode de réalisation particulier, notamment lorsqu'elle est destinée à un flanc de pneumatique, à une gomme intérieure étanche de pneumatique sans chambre (ou autre élément imperméable à l'air), la composition comprise dans le pneumatique conforme à l'invention peut contenir au moins un élastomère diénique essentiellement saturé, en particulier au moins un copolymère EPDM ou un caoutchouc butyle (éventuellement chloré ou bromé), que ces copolymères soient utilisés seuls ou en mélange avec des élastomères diéniques fortement insaturés tels que cités précédemment, notamment NR ou IR, BR ou SBR.

Selon un autre mode préférentiel de réalisation de l'invention, la composition de caoutchouc comprend un coupage d'un (un ou plusieurs) élastomère diénique dit "à haute Tg" présentant une Tg comprise entre - 70°C et 0°C et d'un (un ou plusieurs) élastomère diénique dit "à basse Tg" comprise entre -110°C et -80°C, plus préférentiellement entre -105°C et -90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70% ; il consiste de préférence en un polybutadiène (BR)é présentant un taux (% molaire) d'enchaînements cis-1,4 supérieur à 90%.

Selon un autre mode particulier de réalisation de l'invention, la composition de caoutchouc comprend par exemple de 30 à 100 pce, en particulier de 50 à 100 pce, d'un élastomère à haute Tg en coupage avec 0 à 70 pce, en particulier de 0 à 50 pce, d'un élastomère à basse Tg ; selon un autre exemple, elle comporte pour la totalité des 100 pce un ou plusieurs SBR préparé(s) en solution.

Selon un autre mode particulier de réalisation de l'invention, l'élastomère diénique de la composition comprise dans le pneumatique selon l'invention comprend un coupage d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

Comme expliqué précédemment, la composition de caoutchouc comprise dans le pneumatique selon l'invention est à base d'au moins un élastomère diénique et d'au moins un agent de modification. L'élastomère diénique peut être greffé par l'agent de modification préalablement à son introduction dans la composition de caoutchouc, ou bien peut être greffé par réaction avec l'agent de modification lors de la fabrication de la composition.

La composition comprise dans le pneumatique selon l'invention peut donc contenir un seul élastomère diénique greffé par l'agent de modification (soit greffé préalablement à son introduction dans la composition, soit greffé par réaction avec l'agent de modification pendant la fabrication de la composition), ou un mélange de plusieurs élastomères diéniques tous greffés, ou dont certains sont greffés et les autres pas, le ou les élastomères diéniques pouvant être utilisés en association avec tout type d'élastomère synthétique autre que diénique, voire avec des polymères autres que des élastomères, par exemple des polymères thermoplastiques.

### II-2. Agent de modification

Comme expliqué précédemment, au moins un élastomère diénique est greffé le long de sa chaîne par un agent de modification. L'agent de modification porte un groupe associatif (soit greffé préalablement à son introduction dans la composition, soit greffé par réaction avec l'agent de modification pendant la fabrication de la composition).

Par groupes associatifs, on entend des groupes susceptibles de s'associer entre eux par des interactions physiques non permanentes telles que les interactions ioniques, les liaisons hydrogène, les interactions ions-dipôle et dipôle-dipôle. Selon un mode préféré de l'invention, il s'agit de groupes susceptibles de s'associer par des liaisons hydrogènes, comprenant un hétérocycle azoté, de préférence diazoté, généralement à 5 ou 6 chaînons.

Ainsi, le greffage le long de la chaîne de l'élastomère d'un agent de modification portant un groupe associatif permet d'établir des ponts de réticulation à liaisons non covalentes entre les chaînes d'élastomère.

L'agent de modification est choisi parmi les composés de formule (I) suivante : 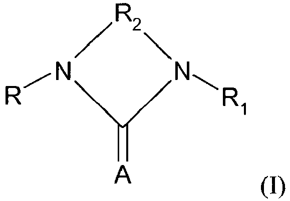 où
R désigne un motif contenant au moins un groupe réactif,
R₁ désigne l'hydrogène,
R₂ désigne un radical alkyl comportant de 2 à 8 atomes de carbone et éventuellement un ou plusieurs hétéroatomes choisis parmi S, N, O, Si,
A désigne un atome d'oxygène ou de soufre ou un groupement -NH, de préférence un atome d'oxygène.

De préférence, R désigne un motif -R₃X, où R₃ désigne un radical alkyl en C₂-C₅₀ pouvant contenir un ou plusieurs atomes d'azote, d'oxygène, de soufre et de silicium, et X est un groupe réactif.

On appelle groupe réactif, le groupe fonctionnel qui permet d'établir le greffage avec l'élastomère. Le ou les groupes réactifs du motif R peuvent être choisis parmi les groupes amine, thiol, époxy, isocyanate, anhydride, alcool et acide carboxylique, de préférence amine et thiol.

Ainsi, l'agent de modification peut être choisi parmi la 2-aminoéthylimidazolidone (UDETA), la 11-mercapto-N-(2-(2-oxoimidazolidin-1-yl)ethyl)undecanamide, la 1-(2-[(2-aminoéthyl)amino]éthyl)imidazolidone (UTETA) et la 1-(2-{2-[(2-aminoéthylamino]éthyl}amino)éthyl]imidazolidone (UTEPA).

Selon un mode de réalisation préféré, le taux d'agent de modification varie de 0,05 à 10% molaire, de préférence de 0,1 à 2% molaire, mieux de 0,2 à 1% molaire.

### II-3. Greffage de l'agent de modification sur l'élastomère

Le greffage de l'élastomère se fait par réaction dudit élastomère avec le ou les groupes réactifs portés par l'agent de modification. Lors de cette réaction, ce ou ces groupes réactifs forment des liaisons covalentes avec la chaîne de l'élastomère.

Le greffage de l'agent de modification peut être réalisé en masse, par exemple dans un mélangeur interne ou un mélangeur externe tel qu'un mélangeur à cylindres, ou en solution.

### a) Greffage par voie radicalaire

Le greffage de l'agent de modification est effectué par greffage radicalaire, c'est-à-dire par réaction radicalaire entre le ou les groupes réactifs de l'agent de modification et une ou plusieurs doubles liaisons de la chaîne de l'élastomère.

La préparation de l'élastomère diénique greffé le long de la chaîne peut être obtenu par une réaction de greffage radicalaire mise en oeuvre en solution ou en masse au moyen d'un réactif de type mercaptan et destinée à greffer lesdits groupes réactifs de l'agent de modification sur la chaîne de l'élastomère diénique de départ. Ladite réaction de greffage est éventuellement mise en oeuvre en présence d'un amorceur de radicaux, tel qu'un peroxyde.

Le procédé de greffage peut être effectué en continu ou en discontinu. Le polymère ainsi modifié peut être séparé de sa solution par tout type de moyen connu par l'homme de l'art et en particulier par une opération de stripping à la vapeur d'eau.

### b) Greffage sur un élastomère préalablement modifié

Le greffage de l'agent de modification peut également se faire par l'intermédiaire de groupes fonctionnels présents sur l'élastomère non greffé. Dans ce cas, le greffage de l'agent de modification est effectué par réaction du ou des groupes réactifs de l'agent de modification sur des groupes fonctionnels présents sur l'élastomère non greffé. De tels groupes fonctionnels peuvent être choisis parmi les groupes anhydrides, époxydes halogènes et acides carboxyliques.

Lorsque l'élastomère porte des groupes fonctionnels époxy, l'agent de modification peut porter des groupes amine, thiol ou alcool.

Lorsque l'élastomère porte des groupes fonctionnels halogénés, l'agent de modification peut porter des groupes amine, thiol ou alcool.

Lorsque l'élastomère porte des groupes fonctionnels amine, l'agent de modification peut porter des groupes époxy, isocyanate, anhydride ou acide carboxylique.

Lorsque l'élastomère porte des groupes fonctionnels acide carboxylique, l'agent de modification peut porter des groupes amine, thiol, époxy ou alcool.

Lorsque l'élastomère porte des groupes fonctionnels anhydride, l'agent de modification peut porter des groupes amine, thiol ou alcool.

Dans le cas où le groupe réactif de l'agent de modification est un groupe amine et où l'élastomère a été préalablement modifié par des groupes époxy, la réaction de greffage est une ouverture de l'époxyde par l'amine et cette réaction peut être mise en oeuvre en solution ou en masse. Ladite réaction de greffage est éventuellement mise en oeuvre en présence d'une base pour la déprotonation de l'amine.

Le procédé de greffage peut être effectué en continu ou en discontinu. Le polymère ainsi modifié peut être séparé de sa solution par tout type de moyen connu par l'homme de l'art et en particulier par une opération de stripping à la vapeur d'eau.

### II-2. Charge renforçante

On peut utiliser tout type de charge renforçante connue pour ses capacités à renforcer une composition de caoutchouc utilisable pour la fabrication de pneumatiques, par exemple une charge organique renforçante tel que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375.

On peut aussi utiliser, selon les applications visées, des noirs de séries plus élevées FF, FEF, GPF, SRF, par exemple les noirs N660, N683, N772. Les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices « Ultrasil 7000 » et « Ultrasil 7005 » de la société Degussa, les silices « Zeosil » 1165MP, 1135MP et 1115MP de la société Rhodia, la silice « Hi-Sil EZ150G » de la société PPG, les silices « Zeopol » 8715, 8745 et 8755 de la Société Huber, les silices à haute surface spécifique telles que décrites dans la demande WO 03/16837.

Lorsque la composition selon l'invention est destinée à des bandes de roulement de pneumatique à faible résistance au roulement, la charge inorganique renforçante utilisée, en particulier s'il s'agit de silice, a de préférence une surface BET comprise entre 45 et 400 m²/g, plus préférentiellement comprise entre 60 et 300 m²/g.

Selon l'invention, le taux de charge renforçante dans la composition est compris entre 30 et 150 pce, plus préférentiellement entre 50 et 120 pce. L'optimum est différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation, la charge renforçante comprend majoritairement de la silice, de préférence le taux de noir de carbone présent dans la composition étant compris entre 2 et 20 pce.

Selon un autre mode de réalisation de l'invention, le charge renforçante comprend majoritairement du noir de carbone.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (III) suivante:

(III) Z - A - Sₓ - A - Z ,

dans laquelle:
- x est un entier de 2 à 8 (de préférence de 2 à 5) ;
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
- Z répond à l'une des formules ci-après: 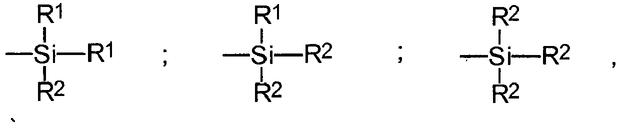 dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (III) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R² = OH dans la formule III ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534, WO2009/062733.

Dans les compositions de caoutchouc comprises dans le pneumatique selon l'invention, la teneur en agent de couplage est préférentiellement comprise entre 0,5 et 12 pce, plus préférentiellement entre 3 et 8 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### II.3 Agent de réticulation chimique

La réticulation chimique permet la formation de liaisons covalentes entre les chaînes d'élastomère. La réticulation chimique peut se faire au moyen d'un système de vulcanisation ou bien au moyen de composés peroxydes.

Le système de vulcanisation proprement dit est à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

De préférence, on utilise un accélérateur primaire du type sulfénamide.

Lorsque la réticulation chimique est effectuée au moyen d'un ou plusieurs composés peroxydes, le ou lesdits composés peroxydes représentent de 0,01 à 10 pce.

A titre de composés peroxydes utilisables comme système de réticulation chimique, on peut citer les acyl peroxydes, par exemple le benzoyl peroxyde ou le p-chlorobenzoyl peroxyde, les cétones peroxydes, par exemple le méthyl éthyl cétone peroxyde, les peroxyesters, par exemple le t-butylperoxyacétate, le t-butylperoxybenzoate et le t-butylperoxyphtalate, les alkyl peroxides, par exemple le dicumyl peroxyde, le di-t-butyl peroxybenzoate et le 1,3-bis(t-butyl peroxyisopropyl)benzène, les hydroperoxydes, par exemple le t-butyl hydroperoxyde.

### II-4. Additifs divers

La composition de caoutchouc comprise dans le pneumatique selon l'invention peut comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone (telle que la Cire Ozone C32 ST), anti-ozonants chimiques, antioxydants (tel que la 6-paraphénylènediamine), des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, des promoteurs d'adhésion (sels de Cobalt par exemple).

De préférence, la composition comprise dans le pneumatique selon l'invention comporte, à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés.

La composition comprise dans le pneumatique selon l'invention peut également contenir, en complément des agents de couplage, des activateurs de couplage de la charge inorganique renforçante ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des POS hydroxylés ou hydrolysables, par exemple des α,ω-dihydroxy-polyorganosiloxanes (notamment des α,ω-dihydroxy-polydiméthylsiloxanes), des acides gras comme par exemple l'acide stéarique.

### II-5. Fabrication des compositions de caoutchouc

La composition de caoutchouc comprise dans le pneumatique selon l'invention est fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation chimique.

Selon un mode de réalisation préférentiel de l'invention, tous les constituants de base de la composition comprise dans le pneumatique de l'invention, à l'exception du système de réticulation chimique, à savoir la ou les charges renforçantes, l'agent de couplage le cas échéant, sont incorporés de manière intime, par malaxage, à l'élastomère diénique ou aux élastomères diéniques au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

Selon un premier mode de réalisation de l'invention, l'élastomère diénique a été greffé par l'agent de modification préalablement à la fabrication de la composition de caoutchouc. Ainsi, dans ce cas, c'est l'élastomère diénique greffé qui est introduit au cours de la première phase dite non-productive.

Selon un second mode de réalisation de l'invention, le greffage de l'élastomère diénique par l'agent de modification est effectué concomitamment à la fabrication de la composition de caoutchouc. Dans ce cas, tant l'élastomère diénique non encore greffé que l'agent de modification sont introduits au cours de la première phase dite non-productive.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de mise en oeuvre complémentaires et autres additifs divers, à l'exception du système de réticulation chimique. La durée totale du malaxage, dans cette phase non-productive, est de préférence comprise entre 1 et 15 min. Après refroidissement du mélange ainsi obtenu au cours de la première phase non-productive, on incorpore alors le système de réticulation chimique à basse température, généralement dans un mélangeur externe tel qu'un mélangeur à cylindres; le tout est alors mélangé (phase productive) pendant quelques minutes, par exemple entre 2 et 15 min.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme une bande de roulement de pneumatique pour véhicule tourisme.

### III. Exemples de réalisation de l'invention

### III-1. Greffage radicalaire du 11-mercapto-N-(2-(2-oxoimidazolidin-1-yl)éthyl)undécanamide sur un élastomère SBR

### 1) Elastomère de départ utilisé :

On utilise comme élastomère de départ le copolymère de styrène et de butadiène (SBR) préparé en solution présentant les caractéristiques de microstructures suivantes, déterminées par RMN ¹H :
taux massique d'unités styrène : 26,5 %
taux massique d'enchaînements 1,2 (vinyliques) dans les unités issues du butadiène : 24,0 %.

Ce SBR présente une masse molaire Mn = 259700 g/mol (Ip = 1,1), une Tg de -48 °C (avec un ΔT = 7°C) et une viscosité Mooney (1+4) de 53,8.

Dans les essais qui suivent, l'élastomère SBR non greffé (élastomère témoin) est noté SBR-A, l'élastomère greffé est noté SBR-B.

### 2) Mise en oeuvre du greffage radicalaire :

300g de SBR antioxydé sont mis en solution dans 2,7L de cyclohexane (2,7 L) dans un réacteur double enveloppe de 10L.

En parallèle, une solution de peroxyde de lauroyle (0,717 g, 1,8 mmol) dans le cyclohexane (100 mL) et une solution de 11-mercapto-N-(2-(2-oxoimidazolidin-1-yl)éthyl)undécanamide (14,2 g, 43,16 mmol) dans le dichlorométhane (720 mL) sont préparées. La quantité de peroxyde introduite est telle que le rapport molaire mercaptan / peroxyde est égal à 24. La solution de peroxyde et la solution de mercaptan sont introduites successivement dans la solution d'élastomère.

L'agent de modification 11-mercapto-N-(2-(2-oxoimidazolidin-1-yl)éthyl)undécanamide possède la formule suivante :

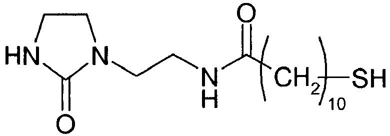

Le mélange est ensuite agité 4 h à 80 °C, puis 31 mL d'une solution de 6-PPD (N-(1,3-diméthylbutyl)-N'-phényl-p-phénylènediamine) dans le méthylcyclohexane à 50 g/l sont ajoutés. Le mélange réactionnel est agité à 80 °C pendant 15 minutes. Le polymère est séparé de son solvant par une opération de stripping (entraînement à la vapeur d'eau).) en présence de TAMOL® et de chlorure de calcium. Le polymère strippé est essoré sur rouleaux et enfin séché à l'étuve à 60 °C sous pression réduite et sous courant d'azote.

Le taux de greffage atteint alors 0,16% molaire (estimé par RMN ¹H). Par ailleurs, l'analyse RMN confirme l'absence de mercaptan libre dans le polymère. Le SBR obtenu présente une masse molaire Mn = 290600 g/mol (Ip = 1,19).

L'élastomère greffé (SBR-B) ainsi réalisé présente un taux de 11-mercapto-N-(2-(2-oxoimidazolidin-1-yl)éthyl)undécanamide de 0,16% molaire.

### Mesure du taux de 11-mercapto-N-(2-(2-oxoimidazolidin-1-yl)éthyl)undécanamide

La détermination du taux de 11-mercapto-N-(2-(2-oxoimidazolidin-1-yl)éthyl)undécanamide greffés est réalisée par une analyse RMN. Les spectres sont acquis sur un spectromètre 500 MHz BRUKER équipé d'une sonde " large bande " BBIz-grad 5 mm. L'expérience RMN ¹H quantitative, utilise une séquence simple impulsion 30° et un délai de répétition de 3 secondes entre chaque acquisition. Les échantillons sont solubilisés dans le sulfure de carbone (CS₂). 100 µL de cyclohexane deutéré (C₆D₁₂) sont ajoutés pour le signal de lock.

Le spectre RMN ¹H permet de quantifier les motifs 11-mercapto-N-(2-(2-oxoimidazolidin-1-yl)éthyl)undécanamide greffés par intégration des signaux caractéristiques des protons CH₂N qui apparaissent à un déplacement chimique compris entre δ=3-3,5ppm

### III-2. Préparation des compositions

On procède pour les essais qui suivent de la manière suivante: on introduit dans un mélangeur interne, rempli à 70% et dont la température initiale de cuve est d'environ 90°C, le ou les élastomères diéniques (greffés ou non greffés), la ou les charges renforçantes éventuelles, l'agent de couplage éventuel puis, après une à deux minutes de malaxage, les divers autres ingrédients à l'exception du système de vulcanisation. On conduit alors un travail thermomécanique (phase non-productive) en une étape (durée totale du malaxage égale à environ 5 min), jusqu'à atteindre une température maximale de "tombée" comprise entre 110°C et 190°C, de préférence entre 130°C et 180°C. On récupère le mélange ainsi obtenu, on le refroidit puis on ajoute le système de vulcanisation (soufre) sur un mélangeur externe (homo-finisseur) à une température inférieure à 120°C, par exemple comprise entre 60 et 100°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

### III-3 Essais de caractérisation - Résultats

L'objet de cet exemple est de comparer les propriétés d'une composition de caoutchouc selon l'invention comprenant un élastomère SBR-B greffé (composition 3) à deux compositions comparatives comprenant un élastomère SBR-A non greffé (compositions 1 et 2).

Les compositions de caoutchouc sont données dans le tableau 1. Les quantités sont exprimées en parties pour 100 parties en poids d'élastomère (pce).

**Tableau 1**

| | **1** | **2** | **3** |
|---|---|---|---|
| SBR-A (1) | 100 | 100 | |
| SBR-B (2) | | | 100 |
| Noir de carbone (3) | 54 | 54 | 54 |
| Soufre | 1 | 1,5 | 0,85 |
| CBS (4) | 1,6 | 2,3 | 1,36 |

| | | | |
|---|---|---|---|
| (1) : SBR-A : copolymère SBR tel que défini au paragraphe III-1.1) (2) SBR-B : copolymère greffé à partir du SBR-A conformément au paragraphe III-1.2) (3) Noir de carbone N234 (4) CBS : *N*-cyclohexyl-2-benzothiazyl-sulfénamide (« Santocure CBS » de la société Flexsys) | | | |

Comme le montre le tableau ci-dessus, les compositions témoins 1 et 2 se distinguent l'une de l'autre par des taux différents de soufre (le taux de CBS également différent étant ajusté sur le taux de soufre).

La composition 3 conforme à l'invention présente un taux de soufre (ainsi que le taux de CBS ajusté à ce taux de soufre) inférieur aux compositions 1 et 2.

### Résultats

Les propriétés après cuisson mesurées à 23°C et 100°C sont données dans le tableau 2.

**Tableau 2**

| **Composition n°** | **1** | **2** | **3** |
|---|---|---|---|
| *Propriétés mesurées à 23°C* | | | |
| MSA10 (MPa) | 6,6 | 7,2 | 7,3 |
| MSA100 (MPa) | 2,3 | 3,2 | 2,6 |
| MSA300 (MPa) | 3,6 | 5,6 | 4,2 |
| MSA300/MSA00 | 1,5 | 1,8 | 1,6 |
| Allongement rupture (%) | 572 | 409 | 573 |
| Contrainte rupture (MPa) | 23,09 | 24,48 | 27,1 |

| *Propriétés mesurées à 100°C* | | | |
|---|---|---|---|
| MSA10 (MPa) | 4,0 | 4,9 | 4,6 |
| MSA100 (MPa) | 1,9 | 2,8 | 2,0 |
| MSA300 (MPa) | 2,7 | Non mesurable | 3,0 |
| MSA300/MSA100 | 1,5 | - | 1,5 |
| Allongement rupture (%) | 409 | 269 | 431 |
| Contrainte rupture (MPa) | 12,2 | 11,7 | 14,9 |
| ΔE*(100°C 0,01% à 7%) | 6,2 | 6,9 | 3,3 |
| tanδₘₐₓ(100°C) | 0,224 | 0,185 | 0,138 |

On constate de façon attendue entre les compositions 1 et 2, une augmentation des modules MSA pour la composition 2 qui comprend un taux supérieur de soufre induisant une réticulation plus importante à 23°C comme à 100°C. On constate également à 23°C et à 100°C un allongement à la rupture à la rupture moins bon (valeur de l'allongement à la rupture plus faible) pour la composition 2 que pour la composition 1 ; résultats également attendus par l'homme du métier au vu des taux d'agent de réticulation de ces deux compositions.

Les propriétés hystérétiques (traduites par la mesure à 100°C de tanδₘₐₓ) sont améliorées dans la composition 2 par rapport à la composition 1. Ceci est connu de l'homme de l'art et expliqué par une augmentation du taux de soufre dans la composition 2 induisant une densité de réticulation plus importante.

On constate par ailleurs de façon surprenante que la composition 3 conforme à l'invention, incluant un polymère greffé ainsi qu'un taux d'agent de réticulation plus faible que les compositions 1 et 2, présente des modules à 23°C MSA qui sont compris entre ceux des compositions 1 et 2 mais avec une très nette amélioration des propriétés d'allongement et contrainte à la rupture vis-à-vis des deux compositions témoins 1 et 2. Alors que lorsque les modules MSA augmentent (composition 3 vis-à-vis de la composition 1), l'homme du métier s'attend à voir une dégradation de l'allongement et la contrainte à la rupture comme on a pu le constater pour la composition 2 vis-à-vis de la composition 1.

On constate le même phénomène à 100°C qui s'accompagne, de plus, de façon très étonnante, d'une très forte baisse de l'hystérèse (valeur de tanδₘₐₓ beaucoup plus faible) et d'une diminution notable de l'effet Payne (ΔE* beaucoup plus faibles) vis-à-vis des deux compositions témoins 1 et 2.

On constate donc que les compositions de caoutchouc conforme à l'invention qui subissent à la fois une réticulation chimique et une réticulation physique, présentent malgré un taux d'agent de réticulation plus faible, d'obtenir des modules MSA élevés tout en augmentant significativement les propriétés à la rupture et en baissant également très fortement l'hystérèse de la composition.

## Revendications

1. Pneumatique comportant au moins une composition de caoutchouc à base d'au moins un élastomère diénique, une charge renforçante, un agent de réticulation chimique, et un agent de modification, éventuellement déjà greffé sur l'élastomère diénique, choisi parmi les composés de formule (I) suivante : 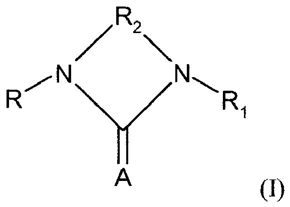 où
R désigne un motif contenant au moins un groupe réactif,
R₁ désigne l'hydrogène,
R₂ désigne un radical alkyl comportant de 2 à 8 atomes de carbone et éventuellement un ou plusieurs hétéroatomes choisis parmi S, N, O, Si,
A désigne un atome d'oxygène ou de soufre ou un groupement -NH, de préférence un atome d'oxygène.

2. Pneumatique selon la revendication 1 **caractérisé en ce que** R désigne un motif -R₃X, où R₃ désigne un radical alkyl en C₂-C₅₀ pouvant contenir un ou plusieurs atomes d'azote, d'oxygène, de soufre et de silicium, et X est un groupe réactif.

3. Pneumatique selon la revendications 1 ou 2, **caractérisé en ce que** l'élastomère diénique est choisi parmi le caoutchouc naturel, les polyisoprènes de synthèse, les polybutadiènes, les copolymères de butadiène, les copolymère d'isoprène et les mélanges de ces élastomères.

4. Pneumatique selon l'une quelconque des revendications 1 à 3, **caractérisé en ce que** la charge renforçante est constituée par une charge renforçante organique, inorganique ou par un coupage de charge renforçante organique et inorganique, et que le taux de charge renforçante dans la composition est compris entre 30 et 150 pce, plus préférentiellement entre 50 et 120 pce.

5. Pneumatique selon la revendication 4, **caractérisé en ce que** la charge renforçante comprend majoritairement de la silice.

6. Pneumatique selon la revendication 4, **caractérisé en ce que** la charge renforçante comprend majoritairement du noir de carbone.

7. Pneumatique selon l'une quelconque des revendications précédentes, **caractérisé en ce que** l'agent de réticulation chimique est constitué par 0,5 à 12 pce de soufre, de préférence par 1 à 10 pce de soufre, ou par 0,01 à 10 pce d'un ou plusieurs composés peroxydes.

8. Pneumatique selon l'une quelconque des revendications 1 à 7, **caractérisé en ce que** le taux d'agent de modification varie de 0,05 à 10% molaire.

9. Pneumatique selon l'une quelconque des revendications précédentes, **caractérisé en ce que** le ou les groupes réactifs du motif R sont choisis parmi les groupes amine, thiol, époxy, isocyanate, anhydride, alcool et acide carboxylique, de préférence amine et thiol.

10. Pneumatique selon la revendication 9, **caractérisé en ce que** l'agent de modification est choisi parmi la 2-aminoéthylimidazolidone (UDETA), la 11-mercapto-N-(2-(2-oxoimidazolidin-1-yl)ethyl)undecanamide, la 1-(2-[(2-aminoéthyl)amino]éthyl)imidazolidone (UTETA) et la 1-(2-{2-[(2-aminoéthylamino]éthyl}amino)éthyl]imidazolidone (UTEPA).

11. Pneumatique selon l'une quelconque des revendications précédentes **caractérisé en ce que** la composition comprend en outre un ou plusieurs élastomères diéniques greffés ou non greffés par un agent de modification de formule (I).

12. Procédé pour préparer une composition de caoutchouc pour pneumatique à base d'au moins un élastomère diénique, une charge renforçante et un agent de réticulation chimique, caractérisé et qu'il comprend les étapes suivantes :
- greffer sur l'élastomère diénique, un agent de modification choisi parmi les composés de formule (I) suivante : 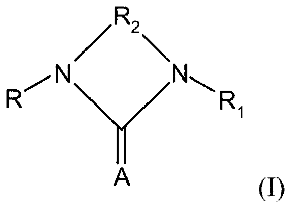 où
R désigne un motif contenant un groupe réactif,
R₁ désigne l'hydrogène,
R₂ désigne un radical alkyl comportant de 2 à 8 atomes de carbone et éventuellement un ou plusieurs hétéroatomes choisis parmi S, N, O, Si,
A désigne un atome d'oxygène ou de soufre ou un groupement -NH, de préférence un atome d'oxygène,
- incorporer à l'élastomère diénique ainsi greffé par l'agent de modification, la charge renforçante, en malaxant thermomécaniquement le tout, en une ou plusieurs fois, jusqu'à atteindre une température maximale comprise entre 130°C et 200°C,
- refroidir l'ensemble à une température inférieure à 100°C,
- incorporer ensuite l'agent de réticulation chimique,
- malaxer le tout jusqu'à une température maximale inférieure à 120°C,
- extruder ou calandrer la composition de caoutchouc ainsi obtenue.

13. Procédé selon la revendication 12 **caractérisé en ce que** R désigne un motif -R₃X, où R₃ désigne un radical alkyl en C₂-C₅₀ pouvant contenir un ou plusieurs atomes d'azote, d'oxygène, de soufre et de silicium, et X est un groupe réactif.

14. Procédé pour préparer une composition de caoutchouc pour pneumatique à base d'au moins un élastomère diénique, une charge renforçante et un agent de réticulation chimique, caractérisé et qu'il comprend les étapes suivantes :
- incorporer à l'élastomère diénique, la charge renforçante, un agent de modification choisi parmi les composés de formule (I) suivante : 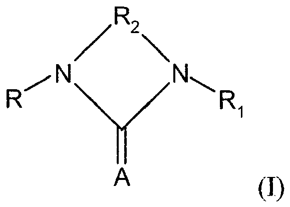 où
R désigne un motif contenant au moins un groupe réactif,
R₁ désigne l'hydrogène,
R₂ désigne un radical alkyl comportant de 2 à 8 atomes de carbone et éventuellement un ou plusieurs hétéroatomes choisis parmi S, N, O, Si,
A désigne un atome d'oxygène ou de soufre ou un groupement -NH, de préférence un atome d'oxygène,
en malaxant thermomécaniquement le tout, en une ou plusieurs fois, jusqu'à atteindre une température maximale comprise entre 130°C et 200°C,
- refroidir l'ensemble à une température inférieure à 100°C,
- incorporer ensuite l'agent de réticulation chimique,
- malaxer le tout jusqu'à une température maximale inférieure à 120°C,
- extruder ou calandrer la composition de caoutchouc ainsi obtenue.

15. Procédé selon la revendication 14 **caractérisé en ce que** R désigne un motif -R₃X, où R₃ désigne un radical alkyl en C₂-C₅₀ pouvant contenir un ou plusieurs atomes d'azote, d'oxygène, de soufre et de silicium, et X est un groupe réactif.

## Patentansprüche

1. Reifen, umfassend mindestens eine Kautschukzusammensetzung auf Basis mindestens eines Dienelastomers, eines verstärkenden Füllstoffs, eines chemischen Vernetzungsmittels und eines Modifizierungsmittels, das gegebenenfalls bereits auf das Dienelastomer aufgepfropft ist und aus den Verbindungen der folgenden Formel (I) ausgewählt ist: 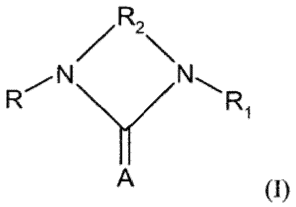 wobei
R für eine Einheit mit mindestens einer reaktiven Gruppe steht,
R₁ für Wasserstoff steht,
R₂ für einen Alkylrest mit 2 bis 8 Kohlenstoffatomen und gegebenenfalls einem oder mehreren Heteroatomen, die aus S, N, O und Si ausgewählt sind, steht,
A für ein Sauerstoff- oder Schwefelatom oder eine -NH-Gruppe, vorzugsweise ein Sauerstoff-atom, steht.

2. Reifen nach Anspruch 1, **dadurch gekennzeichnet, dass** R für eine -R₃X-Einheit steht, wobei R₃ für einen C₂-C₅₀-Alkylrest, der ein oder mehrere Stickstoff-, Sauerstoff-, Schwefel- und Silicium-atome enthalten kann, steht und X für eine reaktive Gruppe steht.

3. Reifen nach Anspruch 1 oder 2, **dadurch gekennzeichnet, dass** das Dienelastomer aus Naturkautschuk, synthetischen Polyisoprenen, Polybutadienen, Butadien-Copolymeren, Isopren-Copolymeren und Mischungen dieser Elastomere ausgewählt ist.

4. Reifen nach einem der Ansprüche 1 bis 3, **dadurch gekennzeichnet, dass** der verstärkende Füllstoff aus einem verstärkenden organischen Füllstoff, einem verstärkenden anorganischen Füllstoff oder einer Mischung von verstärkendem organischem und anorganischem Füllstoff besteht und der Gehalt an verstärkendem Füllstoff in der Zusammensetzung zwischen 30 und 150 phe, weiter bevorzugt zwischen 50 und 120 phe, liegt.

5. Reifen nach Anspruch 4, **dadurch gekennzeichnet, dass** der verstärkende Füllstoff überwiegend Kieselsäure umfasst.

6. Reifen nach Anspruch 4, **dadurch gekennzeichnet, dass** der verstärkende Füllstoff überwiegend Ruß umfasst.

7. Reifen nach einem der vorhergehenden Ansprüche, **dadurch gekennzeichnet, dass** das chemische Vernetzungsmittel aus 0,5 bis 12 phe Schwefel, vorzugsweise 1 bis 10 phe Schwefel, oder 0,01 bis 10 phe einer oder mehrerer Peroxidverbindungen besteht.

8. Reifen nach einem der Ansprüche 1 bis 7, **dadurch gekennzeichnet, dass** der Modifizierungsmittelgehalt von 0,05 bis 10 Mol-% variiert.

9. Reifen nach einem der vorhergehenden Ansprüche, **dadurch gekennzeichnet, dass** die reaktive Gruppe bzw. die reaktiven Gruppen der R-Einheit aus Amin-, Thiol-, Epoxid-, Isocyanat-, Anhydrid-, Alkohol- und Carbonsäuregruppen, vorzugsweise Amin- und Thiolgruppen, ausgewählt ist bzw. sind.

10. Reifen nach Anspruch 9, **dadurch gekennzeichnet, dass** das Modifizierungsmittel aus 2-Aminoethylimidazolidon (UDETA), 11-Mercapto-N-(2-(2-oxo-imidazolidin-1-yl)ethyl)undecanamid, 1-(2-[(2-Aminoethyl)amino]ethyl)imidazolidon (UTETA) und 1-(2-{2-[(2-Aminoethylamino]ethyl}amino)ethyl]-imidazolidon (UTEPA) ausgewählt ist.

11. Reifen nach einem der vorhergehenden Ansprüche, **dadurch gekennzeichnet, dass** die Zusammensetzung außerdem ein oder mehrere mit einem Modifizierungsmittel der Formel (I) gepfropfte oder ungepropfte Dienelastomere umfasst.

12. Verfahren zur Herstellung einer Kautschukzusammensetzung für Reifen auf Basis mindestens eines Dienelastomers, eines verstärkenden Füllstoffs und eines chemischen Vernetzungsmittels, **dadurch gekennzeichnet, dass** es die folgenden Schritte umfasst:
- Aufpfropfen eines Modifizierungsmittels, das aus den Verbindungen der folgenden Formel (I) ausgewählt wird: 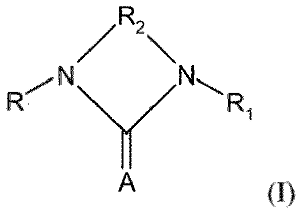 wobei
R für eine Einheit mit einer reaktiven Gruppe steht,
R₁ für Wasserstoff steht,
R₂ für einen Alkylrest mit 2 bis 8 Kohlenstoffatomen und gegebenenfalls einem oder mehreren Heteroatomen, die aus S, N, O und Si ausgewählt sind, steht,
A für ein Sauerstoff- oder Schwefelatom oder eine -NH-Gruppe, vorzugsweise ein Sauerstoff-atom, steht,
auf das Dienelastomer,
- Einarbeiten des verstärkenden Füllstoffs in das so mit dem Modifizierungsmittel gepfropfte Dienelastomer durch ein- oder mehrmaliges thermomechanisches Kneten des Ganzen bis zum Erreichen einer Maximaltemperatur zwischen 130°C und 200°C,
- Abkühlen des Ganzen auf eine Temperatur von weniger als 100°C,
- anschließendes Einarbeiten des chemischen Vernetzungsmittels,
- Kneten des Ganzen bis zum Erreichen einer Maximaltemperatur von weniger als 120°C,
- Extrudieren oder Kalandrieren der so erhaltenen Kautschukzusammensetzung.

13. Verfahren nach Anspruch 12, **dadurch gekennzeichnet, dass** R für eine -R₃X-Einheit steht, wobei R₃ für einen C₂-C₅₀-Alkylrest, der ein oder mehrere Stickstoff-, Sauerstoff-, Schwefel- und Silicium-atome enthalten kann, steht und X für eine reaktive Gruppe steht.

14. Verfahren zur Herstellung einer Kautschukzusammensetzung für Reifen auf Basis mindestens eines Dienelastomers, eines verstärkenden Füllstoffs und eines chemischen Vernetzungsmittels, **dadurch gekennzeichnet, dass** es die folgenden Schritte umfasst:
- Einarbeiten des verstärkenden Füllstoffs und eines Modifizierungsmittels, das aus den Verbindungen der folgenden Formel (I) ausgewählt wird: 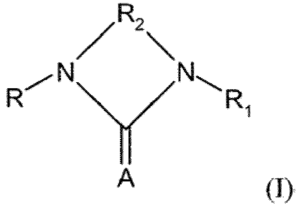 wobei
R für eine Einheit mit mindestens einer reaktiven Gruppe steht,
R₁ für Wasserstoff steht,
R₂ für einen Alkylrest mit 2 bis 8 Kohlenstoffatomen und gegebenenfalls einem oder mehreren Heteroatomen, die aus S, N, O und Si ausgewählt sind, steht,
A für ein Sauerstoff- oder Schwefelatom oder eine -NH-Gruppe, vorzugsweise ein Sauerstoff-atom, steht,
in das Dienelastomer durch ein- oder mehrmaliges thermomechanisches Kneten des Ganzen bis zum Erreichen einer Maximaltemperatur zwischen 130°C und 200°C,
- Abkühlen des Ganzen auf eine Temperatur von weniger als 100°C,
- anschließendes Einarbeiten des chemischen Vernetzungsmittels,
- Kneten des Ganzen bis zum Erreichen einer Maximaltemperatur von weniger als 120°C,
- Extrudieren oder Kalandrieren der so erhaltenen Kautschukzusammensetzung.

15. Verfahren nach Anspruch 14, dadurch gekennzeich-net, dass R für eine -R₃X-Einheit steht, wobei R₃ für einen C₂-C₅₀-Alkylrest, der ein oder mehrere Stickstoff-, Sauerstoff-, Schwefel- und Silicium-atome enthalten kann, steht und X für eine reaktive Gruppe steht.

## Claims

1. Tyre comprising at least one rubber composition based on at least one diene elastomer, one reinforcing filler, one chemical crosslinking agent and one modifying agent, optionally pregrafted to the diene elastomer, chosen from the compounds of following formula (I): 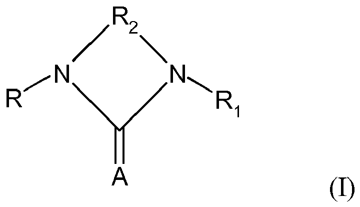 where
R denotes a unit comprising at least one reactive group,
R₁ denotes hydrogen,
R₂ denotes an alkyl radical comprising from 2 to 8 carbon atoms and optionally one or more heteroatoms chosen from S, N, O or Si,
A denotes an oxygen or sulphur atom or an =NH group, preferably an oxygen atom.

2. Tyre according to Claim 1, **characterized in that** R denotes an -R₃X unit, where R₃ denotes a C₂-C₅₀ alkyl radical which can comprise one or more nitrogen, oxygen, sulphur and silicon atoms and X is a reactive group.

3. Tyre according to Claim 1 or 2, **characterized in that** the diene elastomer is chosen from natural rubber, synthetic polyisoprenes, polybutadienes, butadiene copolymers, isoprene copolymers and the mixtures of these elastomers.

4. Tyre according to any one of Claims 1 to 3, **characterized in that** the reinforcing filler is composed of an organic reinforcing filler, an inorganic reinforcing filler or a blend of organic reinforcing filler and inorganic reinforcing filler, and **in that** the content of reinforcing filler in the composition is between 30 and 150 phr, more preferably between 50 and 120 phr.

5. Tyre according to Claim 4, **characterized in that** the reinforcing filler predominantly comprises silica.

6. Tyre according to Claim 4, **characterized in that** the reinforcing filler predominantly comprises carbon black.

7. Tyre according to any one of the preceding claims, **characterized in that** the chemical crosslinking agent is composed of from 0.5 to 12 phr of sulphur, preferably of from 1 to 10 phr of sulphur, or of from 0.01 to 10 phr of one or more peroxide compounds.

8. Tyre according to any one of Claims 1 to 7, **characterized in that** the content of modifying agent varies from 0.05 to 10 mol%.

9. Tyre according to any one of the preceding claims, **characterized in that** the reactive group or groups of the R unit are chosen from amine, thiol, epoxy, isocyanate, anhydride, alcohol and carboxylic acid groups, preferably amine and thiol groups.

10. Tyre according to Claim 9, **characterized in that** the modifying agent is chosen from 2-aminoethylimidazolidone (UDETA), 11-mercapto-N-(2-(2-oxoimidazolidin-1-yl)ethyl)undecanamide, 1-(2-[(2-aminoethyl)amino]ethyl)imidazolidone (UTETA) and 1-(2-{2-[(2-aminoethylamino]ethyl}amino)ethyl]imidazolidone (UTEPA).

11. Tyre according to any one of the preceding claims, **characterized in that** the composition additionally comprises one or more diene elastomers grafted or ungrafted by a modifying agent of formula (I).

12. Process for preparing a tyre rubber composition based on at least one diene elastomer, one reinforcing filler and one chemical crosslinking agent, **characterized in that** it comprises the following stages:
- grafting, to the diene elastomer, a modifying agent chosen from the compounds of following formula (I): 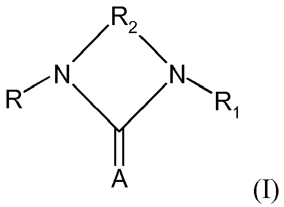 where
R denotes a unit comprising a reactive group,
R₁ denotes hydrogen,
R₂ denotes an alkyl radical comprising from 2 to 8 carbon atoms and optionally one or more heteroatoms chosen from S, N, O or Si,
A denotes an oxygen or sulphur atom or an =NH group, preferably an oxygen atom,
- incorporating, in the diene elastomer thus grafted by the modifying agent, the reinforcing filler, everything being thermomechanically kneaded, in one or more goes, until a maximum temperature of between 130°C and 200°C is reached,
- cooling the combined mixture to a temperature of less than 100°C,
- subsequently incorporating the chemical crosslinking agent,
- kneading everything up to a maximum temperature of less than 120°C,
- extruding or calendaring the rubber composition thus obtained.

13. Process according to Claim 12, **characterized in that** R denotes an -R₃X unit, where R₃ denotes a C₂-C₅₀ alkyl radical which can comprise one or more nitrogen, oxygen, sulphur and silicon atoms and X is a reactive group.

14. Process for preparing a tyre rubber composition based on at least one diene elastomer, one reinforcing filler and one chemical crosslinking agent, **characterized in that** it comprises the following stages:
- incorporating, in the diene elastomer, the reinforcing filler and a modifying agent chosen from the compounds of following formula (I): 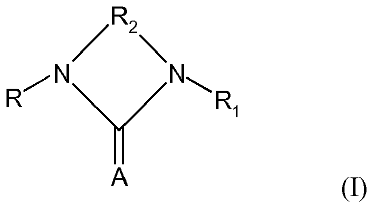 where
R denotes a unit comprising at least one reactive group,
R₁ denotes hydrogen,
R₂ denotes an alkyl radical comprising from 2 to 8 carbon atoms and optionally one or more heteroatoms chosen from S, N, O or Si,
A denotes an oxygen or sulphur atom or an =NH group, preferably an oxygen atom,
everything being kneaded thermomechanically, in one or more goes, until a maximum temperature of between 130°C and 200°C is reached,
- cooling the combined mixture to a temperature of less than 100°C,
- subsequently incorporating the chemical crosslinking agent,
- kneading everything up to a maximum temperature of less than 120°C,
- extruding or calendaring the rubber composition thus obtained.

15. Process according to Claim 14, **characterized in that** R denotes an - R3X unit, where R3 denotes a C2-C50 alkyl radical which can comprise one or more nitrogen, oxygen, sulphur and silicon atoms and X is a reactive group.
